# EUROPEAN PATENT APPLICATION

(11) **EP 2 725 759 A1**
(43) Date of publication of application: **30.04.2014**
(21) Application number: 12822116.5
(22) Date of filing: 10.07.2012
(51) Int. Cl.: H04L 29/06, H04L 12/26

(54) **AUTHENTICATION METHOD FOR BIDIRECTIONAL FORWARDING DETECTION SESSION AND NODE**

(30) Priority: 10.08.2011 CN 201110228700
(71) Applicant: Huawei Technologies Co., Ltd, Shenzhen, Guangdong 518129 (CN)
(72) Inventor: ZHANG, Dacheng, Shenzhen Guangdong 518129 (CN)
(74) Representative: Isarpatent
(86) International application number: PCT/CN2012/078425
(87) International publication number: WO 2013/020437

(57) **Abstract**

A verification method and node for a BFD session relate to the field of communications technologies. The method includes: adding, by an initiating node, a first random number generated by the initiating node to a first BFD control packet and sending the first BFD control packet added with the first random number to a remote node; obtaining and saving, by the remote node, the first random number generated by the initiating node in the received first BFD control packet; adding, by the remote node, a second random number generated by the remote node to the received first BFD control packet and sending the first BFD control packet added with the second random number to the initiating node; and obtaining and saving, by the initiating node, the second random number generated by the remote node in the received second BFD control packet. In subsequent communication, a random number pair formed of the first random number and the second random number, or a third random number generated according to the first random number and the second random number, is sent along with a packet, so as to implement freshness verification of the packet subsequently.

## Description

### TECHNICAL FIELD

The present invention relates to the field of communications technologies, and in particular, to a verification method and node for a bidirectional forwarding detection session.

### BACKGROUND

With the development of technologies, a security problem of an existing BFD (Bidirectional Forwarding Detection, bidirectional forwarding detection) protocol is becoming increasingly prominent as an application of the BFD protocol spreads. At present, a main security problem is that a BFD protocol state changes when a forged packet is received, which causes session flapping. For example, in a single-hop BFD session established between a BFD-A node and a BFD-B node, if an attacker obtains configuration information about a direct connection link between the BFD-A node and the BFD-B node through a network tool, the attacker forges packet information that reaches the BFD-B node through connection to either of the BFD-A node and the BFD-B node, such as the BFD-A node. A state of a BFD node changes with a state of a remote node; therefore, when a replay packet includes incorrect state information, the BFD-A node is forced to change the state of the BFD-A node, which damages a normal session between the BFD nodes.

### SUMMARY

Embodiments of the present invention provide a verification method and node for a bidirectional forwarding detection session, which extend a BFD protocol, thereby reducing a packet forging success rate of an attacker and effectively preventing a replay attack.

According to an aspect of the embodiment of the present invention, a verification method for a bidirectional forwarding detection BFD session includes:
generating a first random number, adding the first random number to a first BFD control packet, and sending the first BFD control packet added with the first random number to a remote node;
receiving a second BFD control packet sent by the remote node, and obtaining and saving a second random number generated by the remote node in the second BFD control packet; and
in subsequent communication, sending a random number pair formed of the first random number and the second random number, or a third random number generated according to the first random number and the second random number, along with a packet, so as to implement freshness verification of the packet subsequently.

According to another aspect of the embodiment of the present invention, a verification method for a bidirectional forwarding detection session BFD includes:
receiving a first BFD control packet sent by an initiating node, and obtaining and saving a first random number generated by the initiating node in the first BFD control packet;
generating a second random number, adding the second random number to the received first BFD control packet, and sending the first BFD control packet added with the second random number to the initiating node; and
in subsequent communication, sending a random number pair formed of the first random number and the second random number, or a third random number generated according to the first random number and the second random number, along with a packet, so as to implement freshness verification of the packet subsequently.

According to another aspect of the embodiment of the present invention, an initiating node includes:
a first generating module, configured to generate a first random number;
a first adding and sending module, configured to add the first random number generated by the first generating module to a first bidirectional forwarding detection BFD control packet, and send the first BFD control packet added with the first random number to a remote node;
a first receiving and obtaining module, configured to receive a second BFD control packet sent by the remote node and obtain a second random number generated by the remote node in the second BFD control packet; and
a first saving and verification module, configured to save the second random number generated by the remote node and obtained by the first receiving and obtaining module.

According to another aspect of the embodiment of the present invention, a remote node includes:
a second receiving and obtaining module, configured to receive a first bidirectional forwarding detection BFD control packet sent by an initiating node and obtain a first random number generated by the initiating node in the first BFD control packet;
a second saving and verification module, configured to save the first random number generated by the initiating node and obtained by the second receiving and obtaining module;
a second generating module, configured to generate a second random number; and
a second adding and sending module, configured to add the second random number generated by the second generating module to the received first BFD control packet, and send the first BFD control packet added with the second random number to the initiating node.

It can be seen from the technical solutions provided by the embodiments of the present invention that, by adding the random numbers generated by the initiating node and the remote node to the BFD control packets, the BFD protocol is extended, and because a different random number pair is generated in each session between the initiating node and the remote node, a packet forging success rate of an attacker is lowered, thereby effectively preventing against a replay attack.

### BRIEF DESCRIPTION OF THE DRAWINGS

To describe the technical solutions in the embodiments of the present invention or in the prior art more clearly, the following briefly introduces accompanying drawings required for describing the embodiments or the prior art. Apparently, the accompanying drawings in the following descriptions merely show some embodiments of the present invention, and a person of ordinary skill in the art may still derive other drawings according to these accompanying drawings without creative efforts.
FIG. 1 is a schematic diagram of a format of a BFD control packet in the prior art;
FIG. 2 is a flow chart of a verification method for a bidirectional forwarding detection session according to an embodiment of the present invention;
FIG. 3 is a schematic diagram of formats of an optional part and an added part in a BFD control packet according to an embodiment of the present invention;
FIG. 4 is a schematic structural diagram of an initiating node according to an embodiment of the present invention; and
FIG. 5 is a schematic structural diagram of a remote node according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

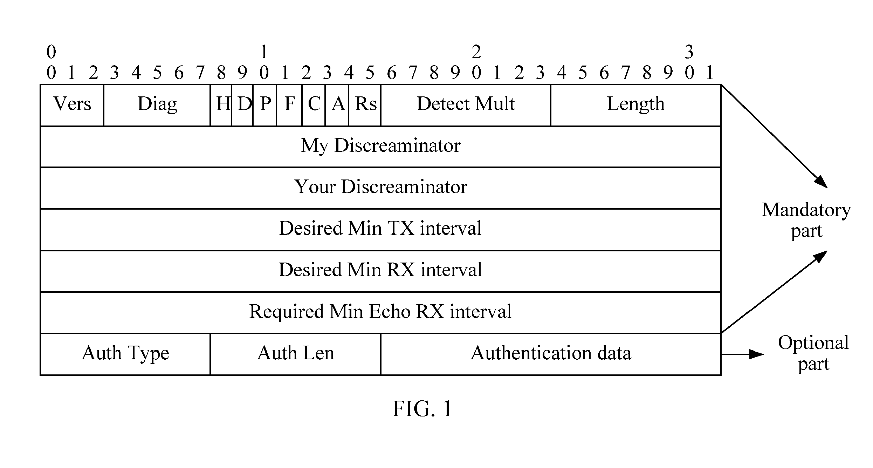

As shown in FIG. 1, a format of an existing BFD control packet includes a mandatory part and an optional authentication part, where fields in the mandatory part are sequentially described as follows:
Vers: a protocol version number, where the version is 0 in this specific embodiment;
Diag: gives a reason for a latest state change of a local system from an "Up" state to another state and an identification code, as shown in FIG. 1;

### FIG. 1 Reason for a latest state change of a local system from an "Up" state to another state and an identification codes

| Diag | Reason |
|---|---|
| 0 | No Diagnostic (no diagnostic) |
| 1 | Control Detection Time Expired (control detection time expired) |
| 2 | Echo Function Failed (echo function failed) |
| 3 | Neighbor Signaled Session Down (neighbor signaled session down) |
| 4 | Forwarding Pane Reset (forwarding pane reset) |
| 5 | Path Down (path down) |
| 6 | Concatenated Path Down (concatenated path down) |
| 7 | Adiministratively Down (administratively down) |
| 8∼31 | Reserved for future use (reserved for future use) |

H: If a sending system does not receive a BFD packet from a remote system, or in a process of ending a BFD session due to a certain reason, the bit H is set to 0; if the sending system believes that the sending system is being communicating with the remote system, the bit H is set to 1;

D: If the bit D is set to 1, it indicates that the sending system expects to operate in a query mode; if the bit D is set to 0, it indicates that the sending system does not expect to operate in the query mode, or it indicates that the sending system cannot operate in the query mode;

P: If the bit P is set to 1, it indicates that the sending system requests confirmation of a connection, or the sending system requests confirmation of a parameter change; if the bit P is set to 0, it indicates that the sending system does not request confirmation;

F: If the bit F is set to 1, it indicates that the sending system responds to a received BFD package of which the bit P is 1; if the bit F is set to 0, it indicates that the sending system does not respond to a package of which the bit P is 1;

C: If the bit C is set to 1, it indicates that implementation of BFD of the sending system does not rely on its control plane (in other words, the BFD is implemented on a forwarding plane, so even if the control plane fails, the BFD still works); if the bit C is set to 0, it indicates that the BFD is implemented on the control plane;

A: If the bit A is set to 1, it indicates that the control packet includes an authentication field, and the session is authenticated;

Rs: The bit Rs is set to 0 at the time of sending, and is ignored at the time of receiving;

Detect Mult: a detection time multiple. In an asynchronous mode, detection time of the sending system is obtained by multiplying a negotiated sending interval by the multiple;

Length: a length (in a unit of byte) of the BFD control packet;

My Discriminator: a unique and non-zero discrimination value generated by the sending system, which is used to isolate a plurality of BFD sessions between two systems;

Your Discriminator: a discrimination value received from the remote system; this field directly returns the received "My Discriminator", and if the value is not known, 0 is returned;

Desired Min Tx Interval: a minimum interval (in milliseconds) desired by the local system when sending BFD control packets;

Required Min Rx Interval: an interval (in milliseconds) between receiving two BFD control packets supported by the local system; and

Required Min Echo Rx Interval: an interval (in milliseconds) between receiving two BFD echo packages supported by the local system. If the value is set to 0, the sending system does not support receiving BFD echo packages.

Fields in the optional authentication part are sequentially described as follows:
Auth Type: Authentication types adopted by the BFD control packet are shown as follows; in the embodiment of the present invention, the "Auth Type" is "0".

| Auth Type | Authentication type |
|---|---|
| 0 | Reserved (reserved) |
| 1 | Simple Password (simple password) |
| 2 | Keyed MD5 (keyed MD5) |
| 3 | Meticulous Keyed MD5 (meticulous keyed MD5) |
| 4~255 | Reserved for future use (reserved for future use) |

Auth Len: a length (in bytes) of the authentication field, including an authentication type field and an authentication length field; and

Authentication data: represents authentication data corresponding to the "Auth Type".

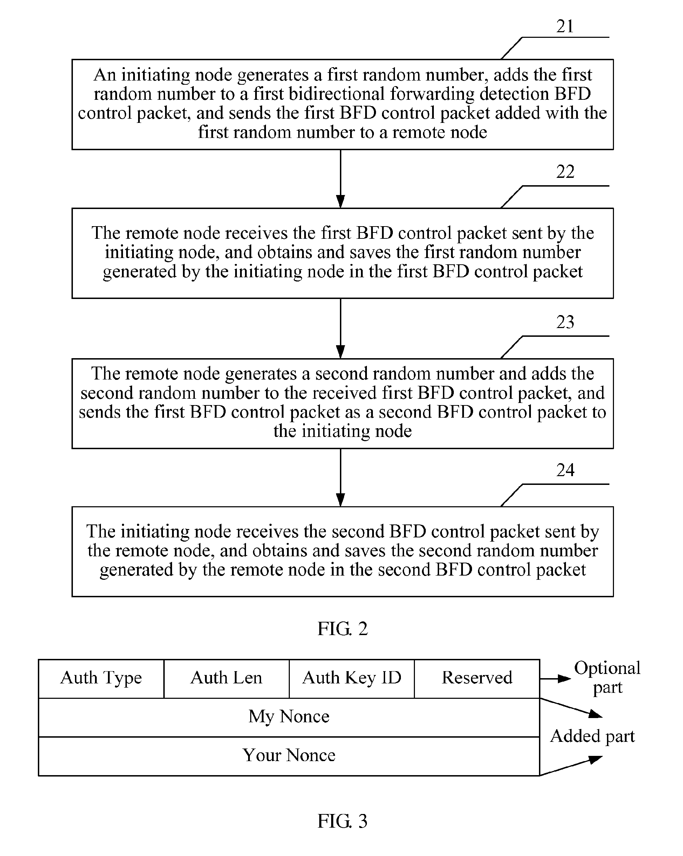

An embodiment of the present invention provides a verification method for a bidirectional forwarding detection session, as shown in FIG. 2, including:
21: An initiating node generates a first random number, adds the first random number to a first bidirectional forwarding detection BFD control packet, and sends the first BFD control packet added with the first random number to a remote node.

Specifically, the first random number is added after an optional authentication part of the first BFD control packet, where the first BFD control packet includes a mandatory part and the optional authentication part. Optionally, when the initiating node does not know the random number generated by the remote node, the initiating node adds '0's after the first random number generated by the initiating node, where the number of '0's is the same as the number of bits in the first random number, that is, 0 is set as the second random number generated by the remote node and added to the first BFD control packet, and then the first BFD control packet obtained by adding '0's after the first random number is sent to the remote node. Specifically, as shown in FIG. 3, in the optional part, Reserved is selected for the "Auth Type", and the "Authentication data" includes "Auth Key ID (authentication key)" and a reserved field "Reserved", and the first random number generated by the initiating node may be added to "My Nonce (my random number)" in an added part after the optional part. Generally, a 32-bit random number is generated, and the number of bits in the first random number and the second random number may be adjusted according to a confidentiality degree or a confidentiality requirement. When a session begins, as the initiating node does not know the second random number generated by the remote node, "Your Nonce (your random number)" may be set to 0.

22: The remote node receives the first BFD control packet sent by the initiating node, and obtains and saves the first random number generated by the initiating node in the first BFD control packet.

Specifically, the remote node receives the first BFD control packet of the first initiating node, and obtains and stores the first random number generated by the initiating node from the "My Nonce" field in the added part of the first BFD control packet, so as to perform comparison with a subsequently received packet and implement freshness verification (freshness verification) of a message subsequently.

23: The remote node generates a second random number and adds the second random number to the received first BFD control packet, and sends the first BFD control packet added with the second random number to the initiating node.

Specifically, the second random number is added before the first random number in the added part of the first BFD control packet. The first BFD control packet added with the second random number is sent as a second BFD control packet to the initiating node. Specifically, as shown in FIG. 3, no adjustment is made to the fields in the optional part, but in the added part, the second random number generated by the remote node is added to the "My Nonce (my random number)" field. The number of bits in the correspondingly generated second random number is the same as the number of bits in the first random number generated by the initiating node. Generally, a 32-bit random number is generated, and the number of the bits in the first random number and the second random number may be adjusted according to a confidentiality degree or a confidentiality requirement; in the added part, the first random number generated by the initiating node is added to the "Your Nonce (your random number)" field.

24: The initiating node receives the second BFD control packet sent by the remote node, and obtains and saves the second random number generated by the remote node in the second BFD control packet.

Specifically, the initiating node receives the second BFD control packet of the remote node, obtains the second random number generated by the remote node from the "My Nonce" field in the added part of the second BFD control packet, and stores the second random number, so as to perform comparison with a subsequently received packet and implement freshness verification of a message subsequently.

Certainly, the initiating node and the remote node may also generate a third random number according to the first random number and the second random number in an agreed manner after sending the first random number and the second random number to each other. For example, a result of an AND operation or an OR operation on the first random number and the second random number is taken as the third random number.

In subsequent communication, a random number pair formed of the first random number and the second random number or the generated third random number is sent along with a packet, so as to implement freshness verification of a message subsequently. As a different random number pair is generated in each session between the initiating node and the remote node, a replay success rate for an attacker choosing an appropriate packet across sessions is lowered, so as to effectively prevent against cross-session replay attacks.

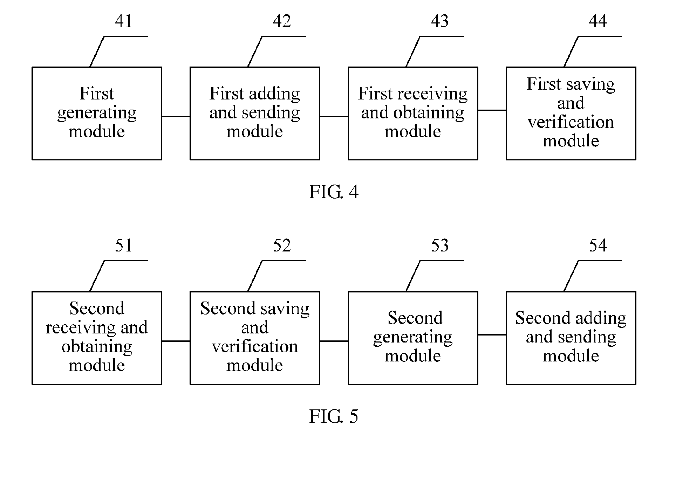

An embodiment of the present invention provides an initiating node, as shown in FIG. 4, including:
a first generating module 41, configured to generate a first random number;
a first adding and sending module 42, configured to add the first random number generated by the first generating module 41 to a first BFD control packet and send the first BFD control packet added with the first random number to a remote node, where
the first adding and sending module 42 is further configured to add the first random number after an optional authentication part of the first BFD control packet, where the first BFD control packet includes a mandatory part and the optional authentication part; and optionally, the first adding and sending module 42 is further configured to send the first BFD control packet to the remote node after adding '0's after the first random number, where the number of '0's is the same as the number of bits in the first random number;
a first receiving and obtaining module 43, configured to receive a second BFD control packet sent by the remote node and obtain a second random number generated by the remote node in the second BFD control packet;
a first saving and verification module 44, configured to save the second random number generated by the remote node and obtained by the first receiving and obtaining module 33, so as to implement freshness verification of a message subsequently; and
optionally, a first random number synthesis module 45, configured to generate a third random number according to the first random number and the second random number in a pre-agreed manner, for example, use a result of an AND operation or an OR operation on the first random number and the second random number as the third random number.

In subsequent communication, a random number pair formed of the first random number and the second random number or the generated third random number is sent along with a packet, so as to implement freshness verification of a message subsequently. As a different random number pair is generated in each session between the initiating node and the remote node, a replay success rate for an attacker choosing an appropriate packet across sessions is lowered, so as to effectively prevent against cross-session replay attacks.

An embodiment of the present invention provides a remote node, as shown in FIG. 5, including:
a second receiving and obtaining module 51, configured to receive a first BFD control packet sent by an initiating node and obtain a first random number generated by the initiating node in the first BFD control packet;
a second saving and verification module 52, configured to save the first random number generated by the initiating node and obtained by the second receiving and obtaining module 51, so as to implement freshness verification of a message subsequently;
a second generating module 53, configured to generate a second random number;
a second adding and sending module 54, configured to add the second random number generated by the second generating module 53 to the received first control packet, and send the first control packet added with the second random number as a second BFD control packet to the initiating node, where
the second adding and sending module 54 is further configured to add the second random number before the first random number generated by the initiating node in the first BFD control packet, where the first random number generated by the initiating node is positioned after an optional authentication part of the first BFD control packet, and the first BFD control packet includes a mandatory part and the optional authentication part; and
optionally, a first random number synthesis module 45, configured to generate a third random number according to the first random number and the second random number in a pre-agreed manner, for example, use a result of an AND operation or an OR operation on the first random number and the second random number as the third random number.

In subsequent communication, a random number pair formed of the first random number and the second random number or the generated third random number is sent along with a packet, so as to implement freshness verification of a message subsequently. As a different random number pair is generated in each session between the initiating node and the remote node, a replay success rate for an attacker choosing an appropriate packet across sessions is lowered, so as to effectively prevent against cross-session replay attacks.

Specific implementation manners of processing functions of the modules included in the initiating node and the remote node are already described in the foregoing method embodiments, and details are not repeatedly described herein.

In the embodiment of the present invention, extension of the BFD protocol is implemented by adding random numbers generated by the initiating node and the remote node to the BFD control packet. In subsequent communication, the pair of random numbers is sent along with packets, and as a different random number pair is generated in each session between the initiating node and the remote node, a replay success rate for an attacker choosing an appropriate message across sessions is lowered, so as to effectively prevent against cross-session replay attacks.

It should be noted that dividing of the modules included in the foregoing node embodiments is merely a type of logical function dividing, to which it is not limited, as long as corresponding functions can be implemented; besides, specific names of the functional modules are merely provided for distinguishing the modules from one another, but are not intended to limit the protection scope of the present invention.

In addition, a person of ordinary skill in the art may understand that all or a part of the steps in the foregoing method embodiments may be performed by a program instructing relevant hardware. The program may be stored in a computer readable storage medium. The storage medium may be a read-only memory, a magnetic disk, or an optical disc.

The foregoing descriptions are merely exemplary implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A verification method for a bidirectional forwarding detection BFD session, comprising:
generating a first random number, adding the first random number to a first BFD control packet, and sending the first BFD control packet added with the first random number to a remote node;
receiving a second BFD control packet sent by the remote node, and obtaining and saving a second random number generated by the remote node in the second BFD control packet; and
in subsequent communication, sending a random number pair formed of the first random number and the second random number, or a third random number generated according to the first random number and the second random number, along with a packet, so as to implement freshness verification of the packet subsequently.

2. The method according to claim 1, wherein the adding the first random number to a first BFD control packet comprises:
adding the first random number after an optional authentication part of the first BFD control packet, wherein the first BFD control packet comprises a mandatory part and the optional authentication part.

3. The method according to claim 1, wherein after adding, after the first random number, 0 the number of which is the same as the number of bits in the first random number, the first random number and the '0's are added to the first BFD control packet, and the first BFD control packet obtained by adding '0's after the first random number is sent to the remote node.

4. An initiating node, comprising:
a first generating module, configured to generate a first random number;
a first adding and sending module, configured to add the first random number generated by the first generating module to a first bidirectional forwarding detection BFD control packet, and send the first BFD control packet added with the first random number to a remote node;
a first receiving and obtaining module, configured to receive a second BFD control packet sent by the remote node and obtain a second random number generated by the remote node in the second BFD control packet; and
a first saving and verification module, configured to save the second random number generated by the remote node and obtained by the first receiving and obtaining module.

5. The initiating node according to claim 4, wherein the first adding and sending module is configured to add the first random number after an optional authentication part of the first BFD control packet, wherein the first BFD control packet comprises a mandatory part and the optional authentication part.

6. The initiating node according to claim 4, wherein the first adding and sending module is further configured to: after adding, after the first random number, 0 the number of which is the same as the number of bits in the first random number, add the first random number and the '0's to the first BFD control packet, and send the first BFD control packet obtained by adding '0's after the first random number to the remote node.

7. A verification method for a bidirectional forwarding detection session BFD, comprising:
receiving a first BFD control packet sent by an initiating node, and obtaining and saving a first random number generated by the initiating node in the first BFD control packet;
generating a second random number, adding the second random number to the received first BFD control packet, and sending the first BFD control packet added with the second random number to the initiating node; and
in subsequent communication, sending a random number pair formed of the first random number and the second random number, or a third random number generated according to the first random number and the second random number, along with a packet, so as to implement freshness verification of the packet subsequently.

8. The method according to claim 7, wherein the adding the second random number to the received first BFD control packet comprises:
adding the second random number before the first random number generated by the initiating node in the first BFD control packet, wherein the first random number generated by the initiating node is positioned after an optional authentication part of the first BFD control packet, and the first BFD control packet comprises a mandatory part and the optional authentication part.

9. A remote node, comprising:
a second receiving and obtaining module, configured to receive a first bidirectional forwarding detection BFD control packet sent by an initiating node and obtain a first random number generated by the initiating node in the first BFD control packet;
a second saving and verification module, configured to save the first random number generated by the initiating node and obtained by the second receiving and obtaining module;
a second generating module, configured to generate a second random number; and
a second adding and sending module, configured to add the second random number generated by the second generating module to the received first BFD control packet, and send the first BFD control packet added with the second random number to the initiating node.

10. The remote node according to claim 9, wherein the second adding and sending module is configured to add the second random number before the first random number generated by the initiating node in the first BFD control packet, wherein the first random number generated by the initiating node is positioned after an optional authentication part of the first BFD control packet, and the first BFD control packet comprises a mandatory part and the optional authentication part.
